# EUROPÄISCHE PATENTANMELDUNG

(11) **EP 0 615 354 A1**
(43) Veröffentlichungstag der Anmeldung: **14.09.1994**
(21) Anmeldenummer: 94101246.0
(22) Anmeldetag: 28.01.1994
(51) Int. Cl.: H04B 7/26, H04Q 7/04

(54) **Mobilfunknetz**

(30) Priorität: 09.03.1993 DE 4307292
(71) Anmelder: ROBERT BOSCH GMBH, 70442 Stuttgart (DE)
(72) Erfinder: Eckstein, Tillmann, Dr., D-71409 Schwaikheim (DE); Hespelt, Volker, Dr., D-71522 Backnang (DE); Scheuermann, Helmut, D-71522 Backnang (DE)

(57) **Zusammenfassung**

Ein Mobilfunknetz, das eine hohe Sicherheit gegen Unterbrechungen der Nachrichtenübertragung zwischen Mobilfunkteilnehmern und Basisfunkstationen gewährleistet, besteht darin, daß die von den Basisfunkstationen (B1, B2) ausgeleuchteten Funkzellen derart auf zwei eigenständige Teilnetze aufgeteilt sind, daß von zwei benachbarten Funkzellen jede zu einem anderen Teilnetz gehört und daß die Funkzellen beider Teilnetze sich derart gegenseitig überlappen, daß ein sich durch die Funkzellen bewegender Mobilfunkteilnehmer, der gleichzeitig in beiden Teilnetzen am Funkbetrieb teilnehmen kann, niemals gleichzeitig für beide Teilnetze einen Wechsel (Handover) von einer Funkzelle zur nächsten vornehmen muß.

## Beschreibung

Die vorliegende Erfindung betrifft ein Mobilfunknetz, das mehrere von Basisfunkstationen ausgeleuchtete Funkzellen aufweist.

Bei bekannten Mobilfunknetzen ist das gesamte Funkfeld in dicht nebeneinanderliegende Funkzellen aufgeteilt. Wie z.B. aus der EP 0 214 319 A1 hervorgeht, ist beim Übergang eines Mobilfunkteilnehmers von einer Funkzelle in eine nächste eine sogenannte "Handover" Prozedur durchzuführen, wobei die Funkverbindung mit der Basisfunkstation der vorangehenden Funkzelle abgebrochen und eine neue Verbindung mit der Basisfunkstation der nächsten Funkzelle aufgebaut wird. Damit ist immer eine merkbare Unterbrechung der Nachrichtenübertragung verbunden. Dies ist eine Erscheinung, die sich besonders störend bei sehr schnell die Funkzellen wechselnden Mobilfunkteilnehmern, wie z.B. schienengebundenen Fahrzeugen oder Flugzeugen auswirkt.

Der Erfindung liegt nun die Aufgabe zugrunde, ein Mobilfunknetz anzugeben, das eine möglichst hohe Sicherheit gegen Unterbrechungen und gegen Störungen der Nachrichtenübertragung zwischen Mobilfunkteilnehmern und dem Mobilfunkfestnetz gewährleistet.

Erfindungsgemäß wird diese Aufgabe durch die Merkmale des Anspruchs 1 gelöst. Vorteilhafte Ausbildungen der Erfindung gehen aus den Unteransprüchen hervor.

Die nach der Erfindung vorgesehene Aufteilung in zwei eigenständige Mobilfunkteilnetze umgeht nicht nur Unterbrechungen der Nachrichtenübertragung beim Handover, sondern bietet auch ein Höchstmaß an Sicherheit gegen einen Totalausfall der Funkverbindung. Denn sollte in einem Teilnetz eine Systemkomponente ausfallen, so kann die Nachrichtenübertragung allein über das zweite Teilnetz aufrechterhalten werden.

Anhand zweier in der Zeichnung schematisch dargestellter Mobilfunknetze wird nachfolgend die Erfindung näher erläutert.
Figur 1 zeigt ein Mobilfunknetz mit zwei Funkvermittlungszentralen und
Figur 2 zeigt ein Mobilfunknetz mit einer Funkvermittlungszentrale.

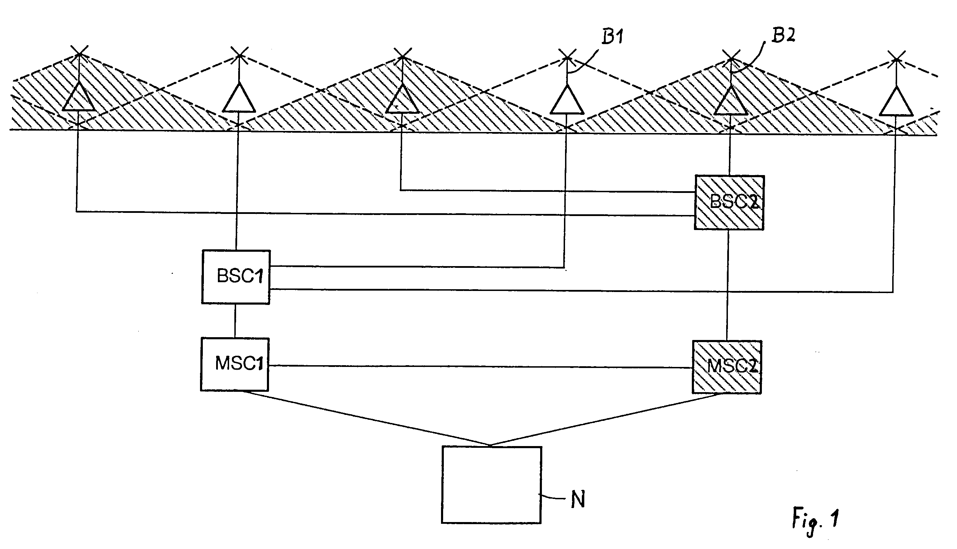

Der Figur 1 ist ein Ausschnitt eines Mobilfunkfeldes zu entnehmen, das in mehrere Funkzellen aufgeteilt ist. Die Funkzellen können z.B. entlang einer Verkehrsstrecke, beispielsweise Eisenbahnlinie, aneinandergereiht sein. Jede Funkzelle weist eine sie ausleuchtende Basisfunkstation B1, B2 auf.

Figur 1 verdeutlicht, daß es zwei Gruppen von Funkzellen gibt, von denen die eine mit den Basisfunkstationen B1 und die andere (schraffiert gezeichnet) mit den Basisfunkstationen B2 ausgerüstet ist. Jede Gruppe gehört zu einem von zwei Teilnetzen, die unabhängig voneinander betrieben werden. Die sich in dem mit den zwei Teilnetzen ausgestatteten Gebiet bewegenden Mobilfunkteilnehmer (das können straßen-, schienengebundene Luft- oder Wasserfahrzeuge sein) verfügen über Sende-/Empfangsgeräte, die unabhängig voneinander gleichzeitig in beiden Teilnetzen Nachrichtenübertragungen ermöglichen.

Die Funkzellen der beiden Teilnetze sind so ineinander verschachtelt, daß abwechselnd eine Funkzelle des einen Teilnetzes neben einer Funkzelle des anderen Teilnetzes liegt. Außerdem überlappen sich die benachbarten Funkzellen der beiden Teilnetze in der Weise (s. Fig. 1), daß ein sich durch die Funkzellen bewegender Mobilfunkteilnehmer niemals gleichzeitig für beide Teilnetze einen Wechsel (Handover) von einer Funkzelle zur nächsten vornehmen muß. Erfährt also ein Sende-/Empfangsgerät des Mobilfunkteilnehmers bei einem Funkzellenwechsel in einem Teilnetz eine unvermeidbare Unterbrechung der Nachrichtenübertragung, so läuft die Übertragung derselben Nachrichten über das zweite Sende-/Empfangsgerät in dem zweiten Teilnetz ungestört weiter, so daß es insgesamt zu keinem Verlust an Information kommt. Eine Auswahlschaltung sorgt dafür, daß immer dasjenige Sende-/Empfangsgerät durchgeschaltet ist, für das gerade keine Handoverprozedur ansteht.

Wie bereits gesagt, handelt es sich um zwei unabhängig voneinander betriebene Mobilfunkteilnetze, wobei jedes Teilnetz mit seinen Funkzellen das gesamte Gebiet abdeckt. Damit kann bei Ausfall eines Teilnetzes der Funkbetrieb über das andere Teilnetz aufrecht erhalten werden. Um diese Redundanz nicht zu beschränken, ist es zweckmäßig, gemäß der Darstellung in Fig. 1 für alle Basisfunkstationen B1, B2 jedes Teilnetzes eine eigene Kontrollzentrale BSC1, BSC2 vorzusehen.

Beim Ausführungsbeispiel in Fig. 1 ist für jedes Teilnetz eine eigene Funkvermittlungszentrale MSC1, MSC2 vorhanden, welche die Verbindung zwischen den Basisfunkstationen B1, B2 und einem Netz N, in dem sich der zweite Endpunkt der Nachrichtenverbindung befindet, herstellt.

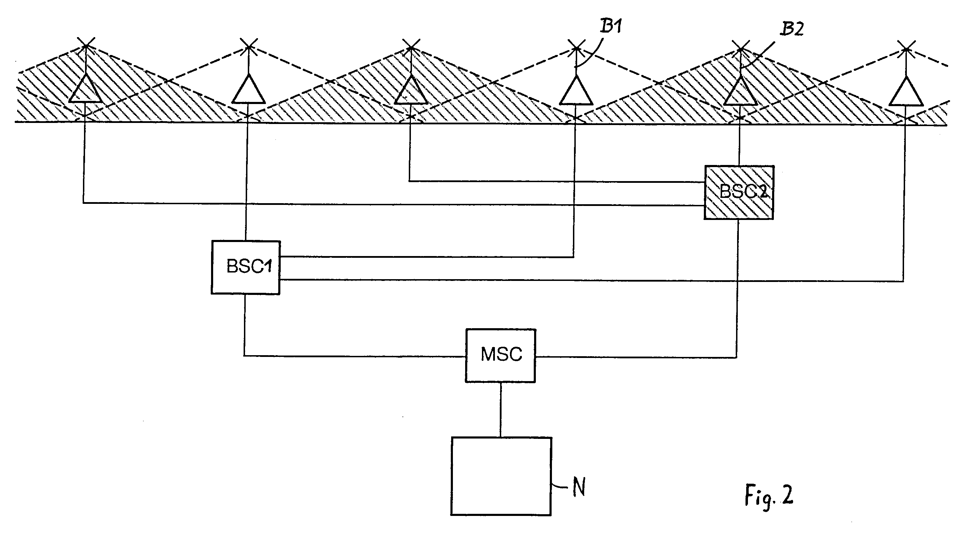

Wie Fig. 2 zeigt, können beide Teilnetze auch über eine gemeinsame Funkvermittlungszentrale MSC an ein Netz N angeschlossen werden.

## Patentansprüche

1. Mobilfunknetz, das mehrere von Basisfunkstationen ausgeleuchtete Funkzellen aufweist, dadurch gekennzeichnet, daß die Funkzellen derart auf zwei eigenständige Teilnetze aufgeteilt sind, daß von zwei benachbarten Funkzellen jede zu einem anderen Teilnetz gehört, und daß die Funkzellen beider Teilnetze sich derart gegenseitig überlappen, daß ein sich durch die Funkzellen bewegender Mobilfunkteilnehmer, der gleichzeitig in beiden Teilnetzen am Funkbetrieb teilnehmen kann, niemals gleichzeitig in beiden Teilnetzen einen Wechsel (Handover) von einer Funkzelle zur nächsten vornehmen muß.

2. Mobilfunknetz nach Anspruch 1, dadurch gekennzeichnet, daß die Mobilfunkteilnehmer mit zwei Sende-/Empfangsgeräten ausgestattet sind, die beide die gleichen Daten mit Basisfunkstationen (B1, B2) austauschen, allerdings jedes mit Basisfunkstationen (B1, B2) eines anderen Teilnetzes.

3. Mobilfunknetz nach Anspruch 1, dadurch gekennzeichnet, daß die Basisfunkstationen (B1, B2) beider Teilnetze mit einer gemeinsamen Funkvermittlungszentrale (MSC) verbunden sind.

4. Mobilfunknetz nach Anspruch 1, dadurch gekennzeichnet, daß die Basisfunkstationen (B1, B2) jedes Teilnetzes jeweils mit einer eigenen Funkvermittlungszentrale (MSC1, MSC2) verbunden sind.
